# EUROPEAN PATENT SPECIFICATION

(11) **EP 2 142 628 B1**
(45) Date of publication and mention of the grant of the patent: **12.09.2018**
(21) Application number: 08747599.2
(22) Date of filing: 02.05.2008
(51) Int. Cl.: C11D 3/04, C11D 7/10, C11D 11/00

(54) **METHOD OF CLEANING COMPRISING WATER SOLUBLE MAGNESIUM COMPOUNDS**
REINUNGSVERFAHREN ENTHALTEND WASSERLÖSLICHE MAGNESIUMVERBINDUNGEN
PROCÉDÉ DE NETTOYER COMPRENANT DES COMPOSÉS AU MAGNÉSIUM SOLUBLES À L'EAU

(30) Priority: 04.05.2007 US 927575 P
(43) Date of publication of application: 13.01.2010
(73) Proprietor: ECOLAB INC., St. Paul, MN 55102 (US)
(72) Inventor: SMITH, Kim, R., Woodbury, MN 55125 (US); BESSE, Michael, E., Golden Valley, MN 55427 (US); TJELTA, Brenda, L., St. Paul, MN 55116 (US); SANDERS, Lisa, M., Eagan, MN 55122 (US); OLSON, Keith, E., Apple Valley, MN 55124 (US)
(74) Representative: Godemeyer Blum Lenze Patentanwälte Partnerschaft mbB - werkpatent
(86) International application number: PCT/US2008/062571
(87) International publication number: WO 2008/137797

(56) References cited:
- EP-A1- 0 070 587
- WO-A1-2006/119162
- WO-A2-2006/083813
- JP-A- 07 292 389
- JP-A- 2003 525 104
- JP-A- 2005 154 716
- US-A- 5 863 877
- US-A1- 2006 069 001

## Description

### Field of the Invention

The present invention relates to methods employing a water soluble magnesium compound. The invention also relates to methods of using such compositions to reduce lime sale, remove soap scum, reduce hard water spotting and the like. The composition includes water and water soluble magnesium compound, but lacks other materials commonly used in cleaning compositions. The methods and compositions can provide magnesium ion at predefined ratios to calcium ion in water, such as magnesium ion in a molar amount equal to or in excess over a molar amount of calcium ion. A water soluble magnesium salt including an anion of a water soluble calcium salt is more effective than a magnesium salt with an anion of a water insoluble calcium salt.

### Background of the Invention

The level of hardness in water can have undesirable effects in many systems. For example, when hard water is used in conjunction with cleaning compositions, hard water can cause precipitation of hard water scale or components of a cleaning agent. In general, hard water refers to water having a level of calcium and magnesium ions in excess of about 100 ppm expressed in units of ppm calcium carbonate.

Conventional methods add ingredients to hard water to overcome the undesirable effects of hard water. Water softeners add sodium ion to replace calcium and magnesium ions in hard water. Conventional cleaning compositions include builders like chelating agents, sequestrants, or threshold agents to tie up calcium and magnesium ions in the hard water. A great deal of effort has gone into developing new and better builders. Over the decades, a great deal of effort has gone into making more and more complicated detergent formulations in an attempt to provide desired performance in hard water.

It is unexpected that going in the opposite direction from the rest of the field to make a simpler composition could overcome the undesirable effects of hard water. Even more so, it is entirely unexpected that a simpler composition including added hardness ion would have a beneficial effect on lime scale or precipitate formation from hard water, removing soap scum, or the like.

JP 2005/154716 provides a detergent composition for automatic dishwashers containing (a) a 3 to 40 mass% nonionic surfactant, (b) a 0.2 to 10 mass% polymeric chelating agent, (c) a specific acescent or alkalescent 50 to 96.8 mass% water-soluble electrolyte, and a 0.1 to 7 mass% enzyme for detergents.

EP 0 070 587 A1 describes a liquid rinse aid composition for use in an automatic dishwashing machine consisting essentially of from 1% to 40% by weight of a low foaming ethoxylated nonionic surfactant, from 0 to 30% by weight of an organic chelating agent, from 0.1% to 10% by weight of polyvalent metal ions selected from Mg, Zn, Sn, Bi, Sn, Ti and mixtures thereof, said ions being present in the form of a water soluble salt thereof, and a hydrotrope-water solubilizing system.

WO2006/083813 A2 describes a rinse-aid composition comprising a polyalkoxylated trisiloxane surfactant and a non-ionic solubilizing system having a cloud point above room temperature and an acidifying agent, wherein the rinse-aid composition has a pH of from about 1 to about 4.5.

WO2006/119162 A2 describes a method of washing ware in an automatic institutional warewashing machine, using a cleaning composition containing a surfactant which eliminates the need for a surfactant in the rinse

### step. Summary of the Invention

The present invention departs from generally held beliefs that complicated formulae are necessary to overcome the deleterious and undesirable effects associated with hard water. When cleaning or rinsing hard surfaces, the use of hard water often results in hard water spotting, filming, staining, or soap scum left on the surface. Hard water spotting, staining, filming, and scale are particularly apparent when washing dishes in an automatic warewashing machine, cleaning basins or countertops or other hard surfaces in a kitchen or bathroom, or when washing vehicles. The present invention includes simpler compositions used in the methods that overcome the stated undesirable effects of hard water. The present invention comprises methods employing a water soluble magnesium salt to counter the undesirable effects of calcium ion in hard water. In fact, one embodiment of the present methods employ nothing more than water soluble magnesium salt and hard water to this end. The present methods can reduce or prevent the formation of lime scale along with other deleterious effects associated with the use of hard water for cleaning hard surfaces. The present invention may be used to prepare presoaks or prewashes, cleaning agents, or rinse agents used in the methods. The present invention relates to a method, as described in claim 1. In certain embodiments, the composition used in the methods includes water and water soluble magnesium compound, but lacks other materials commonly used in cleaning compositions. The methods can provide magnesium ion at predefined ratios to calcium ion in water, such as magnesium ion in a molar amount equal to or in excess over a molar amount of calcium ion. The water soluble magnesium salt has an associated anion that can exchange with the carbonate associated with the calcium ion. It is preferred that the calcium anion product has the highest possible solubility, but is not required. These compositions can be used for reducing lime scale or precipitate formation from hard water, removing soap scum, or the like.

In another embodiment, the present invention includes a method of cleaning ware as defined in claim 1. This method can also reduce hard water spotting, scaling, or deposits. The method includes contacting the ware with an aqueous composition including water and a water soluble magnesium salt; and recovering the ware with an acceptable amount of hard water spotting, scaling, or deposits. In this method, the aqueous composition during contacting includes magnesium ion in a molar amount equal to or in excess over a molar amount of calcium ion. In this method, the water soluble magnesium salt includes an anion that forms a water soluble salt with calcium.

### Brief Description of the Figures

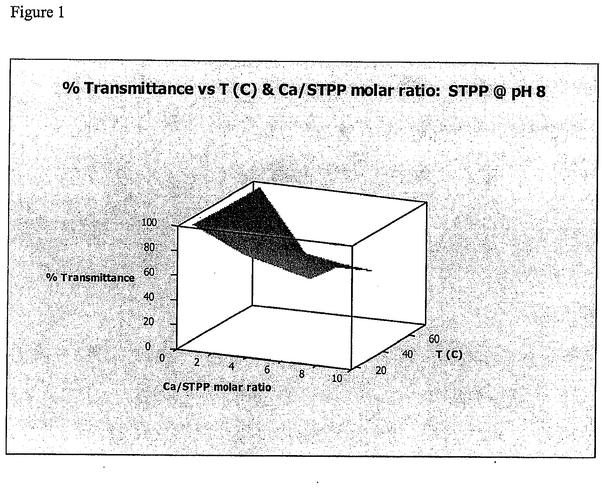

Figures 1-6 each have an x, y, and z axis. The x-axis is a measure of the molar ratio of calcium to builder, e.g., STPP, or water soluble magnesium compound. The y-axis is a measure of the level of light transmittance thru the samples with 0% being no light transmitted and 100% being the entire beam of light transmitted. Full or partial loss of transmittance occurs as a consequence of the presence of particulate formation in the initially clear samples. An effective builder prevents or reduces precipitation resulting in a clear sample. The z-axis is a measure of the test temperature, ranging from 20-60°C.
Figure 1 is a comparative plot illustrating the performance of STPP as a builder in the presence of various levels of calcium, at various temperatures, and at a constant pH of 8.
Figure 2 is a plot of the performance of magnesium chloride in preventing precipitation in the presence of various levels of calcium, at various temperatures, and at a constant pH of 8.
Figure 3 is a comparative plot illustrating the performance of STPP as a builder in the presence of various levels of calcium, at various temperatures, and at a constant pH of 10.
Figure 4 is a plot of the performance of magnesium chloride in preventing precipitation in the presence of various levels of calcium, at various temperatures, and at a constant pH of 10.
Figure 5 is a comparative plot illustrating the performance of STPP as a builder in the presence of various levels of calcium, at various temperatures, and at a constant pH of 12.
Figure 6 is a plot of the performance of magnesium chloride in preventing precipitation in the presence of various levels of calcium, at various temperatures, and at a constant pH of 12.
Figure 7 is a photograph of the interior of a dishwashing machine showing considerable lime scale deposition after it was run for 100 cycles using 1.1 g (17 grain) hard water only.
Figure 8 is a photograph of the interior of a dishwashing machines after it was run for 100 cycles using 1.1 g water and with water soluble magnesium compound, magnesium sulfate, introduced as the sole rinse agent. The presence of magnesium sulfate as the sole rinse agent prevented the build-up of lime scale on metal. No builder or sheeting agent was needed to obtain this benefit.

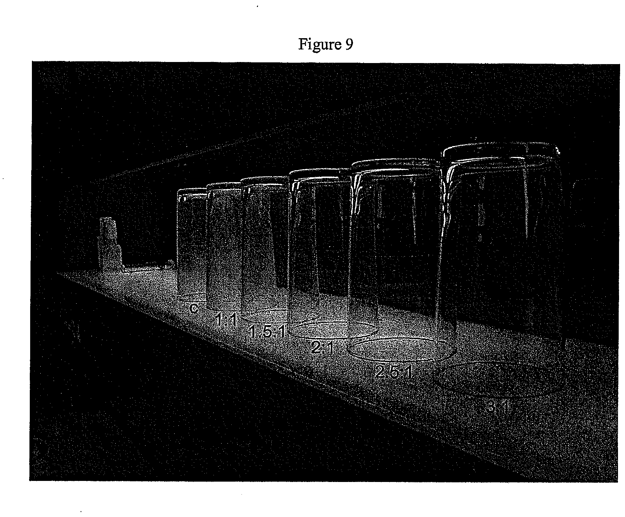

Figure 9 is a photograph of six glasses. Glass "C" is a control using hard water alone as the rinse agent. The other glasses were rinsed using molar ratios of magnesium to calcium of 1:1, 1.5:1, 2:1, 2.5:1, or 3:1 and are labeled as such. These ratios are based on the total amount of magnesium present including that present in the incoming water. The results in Figure 9 show that water soluble magnesium compound, magnesium sulfate, as the sole rinse agent reduced and prevented build-up of lime scale on glasses. Surprisingly, in this example, the 1:1 molar ratio of magnesium to calcium gave increased hard water scaling on glass, while the higher ratios gave reduced scaling compared to the control glass.
Figure 10 is a photograph of two glasses, one subjected to 100 cycles in a dishwashing machine with magnesium chloride and the other with magnesium sulfate. The molar ratio of magnesium to calcium was 1:1. Unexpectedly, the 1:1 molar ratio of magnesium to calcium showed better results than the control when magnesium chloride was substituted for magnesium sulfate

### Detailed Description of the Invention

### Definitions

As used herein, the term "water soluble" refers to a compound that can be dissolved in water at a concentration of more than 1 wt-%.

As used herein, the terms "sparingly soluble" or "sparingly water soluble" refer to a compound that can be dissolved in water only to a concentration of 0.1 to 1.0 wt-%.

As used herein, the term "water insoluble" refers to a compound that can be dissolved in water only to a concentration of less than 0.1 wt-%.

As used herein, the terms "chelating agent" and "sequestrant" refer to a compound that forms a complex (soluble or not) with water hardness ions (from the wash water, soil and substrates being washed) in a specific molar ratio. Chelating agents that can form a water soluble complex include sodium tripolyphosphate, EDTA, DTPA, NTA, citrate, and the like. Sequestrants that can form an insoluble complex include sodium triphosphate, zeolite A, and the like. As used herein, the terms "chelating agent" and "sequestrant" are synonymous.

As used herein, the term "free of chelating agent" refers to a composition, mixture, or ingredients that do not contain a chelating agent or sequestrant or to which a chelating agent or sequestrant has not been added. Should a chelating agent or sequestrant be present through contamination of a composition, mixture, or ingredient that is free of chelating agent, the amount of a chelating agent or sequestrant shall be less than 7 wt-%. In another embodiment, such an amount of a chelating agent or sequestrant is less then 2wt-%. In other embodiments, such an amount of a chelating agent or sequestrant is less then 0.5 wt-% and in yet other embodiments, such an amount of a chelating agent or sequestrant is less than 0.1 wt-%.

As used herein, the term "lacking an effective amount of chelating agent" refers to a composition, mixture, or ingredients that contains too little chelating agent or sequestrant to measurably affect the hardness of water. Accordingly, an ineffective amount of chelating agent or sequestrant will vary with the hardness of the water and the dilution rate of a concentrate.

As used herein, the term "threshold agent" refers to a compound that inhibits crystallization of water hardness ions from solution, but that need not form a specific complex with the water hardness ion. This distinguishes a threshold agent from a chelating agent or sequestrant. Threshold agents include a polyacrylate, a polymethacrylate, an olefin/maleic copolymer, and the like.

As used herein, the term "antiredeposition agent" refers to a compound that helps keep suspended in water instead of redepositing onto the object being cleaned.

As used herein, the term "phosphate-free" refers to a composition, mixture, or ingredient that does not contain a phosphate or phosphate-containing compound or to which a phosphate or phosphate-containing compound has not been added. Should a phosphate or phosphate-containing compound be present through contamination of a phosphate-free composition, mixture, or ingredients, the amount of phosphate shall be less than 0.5 wt %. More preferably, the amount of phosphate is less then 0.1 wt-%, and most preferably, the amount of phosphate is less than 0.01 wt %.

As used herein, the term "phosphorus-free" refers to a composition, mixture, or ingredient that does not contain phosphorus or a phosphorus-containing compound or to which phosphorus or a phosphorus-containing compound has not been added. Should phosphorus or a phosphorus-containing compound be present through contamination of a phosphorus-free composition, mixture, or ingredients, the amount of phosphorus shall be less than 0.5 wt %. More preferably, the amount of phosphorus is less than 0.1 wt-%, and most preferably the amount of phosphorus is less than 0.01 wt %.

"Cleaning" means to perform or aid in soil removal, bleaching, microbial population reduction, rinsing, or combination thereof.

As used herein, the term "ware" includes items such as eating and cooking utensils. As used herein, the term "warewashing" refers to washing, cleaning, or rinsing ware.

As used herein, the term "hard surface" includes showers, sinks, toilets, bathtubs, countertops, windows, mirrors, transportation vehicles, floors, and the like. These surfaces can be those typified as "hard surfaces" (such as walls, floors, bed-pans, etc.,), or fabric surfaces, e.g., knit, woven, and non-woven surfaces (such as surgical garments, draperies, bed linens, bandages, etc.,), or patient-care equipment (such as respirators, diagnostic equipment, shunts, body scopes, wheel chairs, beds, etc.,), or surgical and diagnostic equipment.

As used herein, the phrase "health care surface" refers to a surface of an instrument, a device, a cart, a cage, furniture, a structure, a building, or the like that is employed as part of a health care activity. Examples of health care surfaces include surfaces of medical or dental instruments, of medical or dental devices, of electronic apparatus employed for monitoring patient health, and of floors, walls, or fixtures of structures in which health care occurs. Health care surfaces are found in hospital, surgical, infirmity, birthing, mortuary, and clinical diagnosis rooms. Health care surfaces include articles and surfaces employed in animal health care.

As used herein, the term "instrument" refers to the various medical or dental instruments or devices that can benefit from cleaning with a stabilized composition according to the present invention.

As used herein, the phrases "medical instrument", "dental instrument", "medical device", "dental device", "medical equipment", or "dental equipment" refer to instruments, devices, tools, appliances, apparatus, and equipment used in medicine or dentistry. Such instruments, devices, and equipment can be cold sterilized, soaked or washed and then heat sterilized, or otherwise benefit from cleaning in a composition of the present invention. These various instruments, devices and equipment include, but are not limited to: diagnostic instruments, trays, pans, holders, racks, forceps, scissors, shears, saws (e.g. bone saws and their blades), hemostats, knives, chisels, rongeurs, files, nippers, drills, drill bits, rasps, burrs, spreaders, breakers, elevators, clamps, needle holders, carriers, clips, hooks, gouges, curettes, retractors, straightener, punches, extractors, scoops, keratomes, spatulas, expressors, trocars, dilators, cages, glassware, tubing, catheters, cannulas, plugs, stents, scopes (e.g., endoscopes, stethoscopes, and arthoscopes) and related equipment, and the like, or combinations thereof.

As used herein, a solid cleaning composition refers to a cleaning composition in the form of a solid such as a powder, a particle, an agglomerate, a flake, a granule, a pellet, a tablet, a lozenge, a puck, a briquette, a brick, a solid block, a unit dose, or another solid form known to those of skill in the art. The term "solid" refers to the state of the detergent composition under the expected conditions of storage and use of the solid detergent composition. In general, it is expected that the detergent composition will remain in solid form when exposed to temperatures of up to about 37.7 °C (100°F) and greater than about 48.8 °C (120°F).

By the term "solid" as used to describe the processed composition, it is meant that the hardened composition will not flow perceptibly and will substantially retain its shape under moderate stress or pressure or mere gravity, as for example, the shape of a mold when removed from the mold, the shape of an article as formed upon extrusion from an extruder, and the like. The degree of hardness of the solid cast composition can range from that of a fused solid block, which is relatively dense and hard, for example, like concrete, to a consistency characterized as being malleable and sponge-like, similar to caulking material.

As used herein, weight percent (wt-%), percent by weight, % by weight, and the like are synonyms that refer to the concentration of a substance as the weight of that substance divided by the total weight of the composition and multiplied by 100.

As used herein, the term "about" modifying the quantity of an ingredient in the compositions of the invention or employed in the methods of the invention refers to variation in the numerical quantity that can occur, for example, through typical measuring and liquid handling procedures used for making concentrates or use solutions in the real world; through inadvertent error in these procedures; through differences in the manufacture, source, or purity of the ingredients employed to make the compositions or carry out the methods; and the like. The term about also encompasses amounts that differ due to different equilibrium conditions for a composition resulting from a particular initial mixture. Whether or not modified by the term "about", the claims include equivalents to the quantities.

It should be noted that, as used in this specification and the appended claims, the singular forms "a," "an," and "the" include plural referents unless the content clearly dictates otherwise. Thus, for example, reference to a composition containing "a compound" includes a mixture of two or more compounds. It should also be noted that the term "or" is generally employed in its sense including "and/or" unless the content clearly dictates otherwise.

### Methods and Compositions Employing Water Soluble Magnesium Compound

The present invention is useful in use a presoak or prewash, a cleaning agent, or a rinse agent for treating a variety of surfaces. Compositions prepared are useful in automatic warewashing machines, in hand dishwashing, in cleaning hard surfaces such as windows, mirrors, ceramic tile and basins, granite, plastic, stainless steel, wood, countertops, or vehicles to name a few. Compositions prepared are also useful in cleaning or treating medical or dental equipment or instruments and in washing linens. The present inventors have discovered, unexpectedly, that a water soluble magnesium compound can be employed to, for example, reduce lime scale or precipitate formation from hard water, reduce formation of soap scum, remove soap scum. In certain embodiments the method employs water and water soluble magnesium compound but lacks other materials commonly used in cleaning compositions. These compositions can be employed in any of a variety of situations in which water spotting or scaling are a problem, such as cleaning or rinsing a hard surface, such as tile, glass ware, other ware.

The present inventors discovered that compositions of water soluble magnesium salt that provide magnesium ion at predefined ratios to calcium ion in water, such as magnesium ion in a molar amount equal to or in excess over a molar amount of calcium ion, advantageously reduce lime scale or precipitate formation from hard water, remove soap scum. For example, magnesium ion and calcium ion can be in a molar ratio of 1:1 or the composition can include a greater amount of magnesium ion. In a more preferred embodiment, magnesium ion and calcium ion can be in a molar ratio of about 1.5:1 up to about 3:1. Further, the present inventors discovered that a compositions of water soluble magnesium salt including an anion of a water soluble calcium salt are more effective than a magnesium salt with an anion of a water insoluble calcium salt. These compositions can be used for reducing lime scale or precipitate formation from hard water, removing soap scum.

Surprisingly, water containing a water soluble magnesium salt can have beneficial effects in reducing certain deleterious effects of hard water. In fact, a composition of only water soluble magnesium salt in hard water can have these beneficial effects. It was unexpectedly discovered that a water soluble magnesium salt worked as well as a conventional chelating agent or sequestrant (sodium tripolyphosphate (STPP)) at preventing precipitation of calcium salts. Also unexpectedly, a composition of only water soluble magnesium salt in hard water reduced formation of lime scale from hard water. Further, unexpectedly, rinse water containing only a water soluble magnesium salt reduced formation of lime scale from hard water on glasses after warewashing, and on the portions of the dishwasher that contact water. Surprisingly, a composition comprising only water soluble magnesium salt in hard water removed soap scum from a tile. These benefits can be achieved employing a composition including magnesium ion in a molar amount equal to or in excess over a molar amount of calcium ion. These benefits can be achieved at a lower concentration of water soluble magnesium salt using a water soluble magnesium salt including an anion of a water soluble calcium salt are more effective than a magnesium salt with an anion of a water insoluble calcium salt.

As described above, these beneficial effects can be achieved by a composition including water and water soluble magnesium compound, but lacking other materials commonly used in cleaning compositions. That is, in certain embodiments, a composition of only water and water soluble magnesium compound can exhibit such beneficial effects. The composition can include magnesium ion in a molar amount equal to or in excess over a molar amount of calcium ion. The composition can include water soluble magnesium salt using a water soluble magnesium salt including an anion of a water soluble calcium salt.

In certain embodiments, the present composition used in the methods consists essentially of water and water soluble magnesium compound. As used herein, the phrases "consisting essentially of' or "consists essentially of' refer to a composition including the listed ingredients water and water soluble magnesium compound but lacking an effective amount of any cleaning component commonly used in cleaning compositions.

As used herein with respect to ingredients of the present compositions, water refers to potable water as obtained from a municipal or private water system, e.g., a public water supply or a well. The water can be hard water, city water, well water, water supplied by a municipal water system, water supplied by a private water system, treated water, or water directly from the system or well. In an embodiment, the present method employs water that wasn't treated with a polymeric water softener bed such as in use today and which requires periodic regeneration with sodium chloride to work. In general, hard water refers to water having a level of calcium and magnesium ions in excess of about 100 ppm. Often, the molar ratio of calcium to magnesium in hard water is about 2:1 or about 3:1. Although most locations have hard water, water hardness tends to vary from one location to another.

### Methods of the Invention

The present invention includes a method of cleaning ware as defined in claim 1. This method of cleaning results in reducing hard water spotting, scaling, or deposits. This embodiment of the method includes contacting the object with an aqueous composition including water and a water soluble magnesium salt. The method also includes recovering the object with an acceptable amount of hard water spotting, scaling, or deposits.

The following rating system is used to grade spotting on hard surfaces. In developing the rating system, clear glasses were used. Surfaces having a rating of 1, 1.5 and 2 are considered to have an acceptable amount of spotting. Surfaces having a rating of 3 have a marginally acceptable amount of spotting while surfaces rated a 4 or a 5 have unacceptable amounts of spotting.

| **Rating** | **Spots** | **Film** |
|---|---|---|
| 1 | Substantially No spotting | No film |
| 1.5 | 1/8 surface spotted | No film to barely perceptible |
| 2 | ¼ surface spotted | Trace/barely perceptible |
| 3 | ½ surface spotted | Slight film |
| 4 | ¾ surface spotted | Moderate film |
| 5 | Entire surface spotted | Heavy film |

As used herein, an acceptable amount of hard water spotting, scaling, or deposits refers to surfaces rated a 1, 1.5 or 2 in the provided grid. In other words, surfaces having as much as one quarter of the surface spotted and/or only a barely perceptible film present are deemed acceptable. In other embodiments, surfaces having less than one quarter of the surface containing spots are deemed acceptable. In yet other embodiments, surfaces have up to about 1/8 of the surface containing spotting is deemed acceptable and in other embodiments the surface is substantially free of spotting.

During contacting, the aqueous composition can include magnesium ion in a molar amount equal to or in excess over the molar amount of calcium ion. In one embodiment, the aqueous composition during contacting includes magnesium ion at a wt-% greater than or equal to one half times the wt-% of calcium ion. In another embodiment, the water soluble magnesium salt comprises an anion that forms an insoluble or sparingly soluble calcium salt and the aqueous composition during contacting includes magnesium ion in a molar amount equal to or greater than two-times the molar amount of calcium ion.

One skilled in the art will appreciate that the higher the solubility of the calcium salt formed from the anion from the soluble magnesium compound, the lower the ratio of magnesium to calcium need be. In other words, if the calcium salt that forms is highly soluble, the ratio of magnesium to calcium concentration will approach 1:1 whereas, if the resultant calcium salt is low in solubility, the ratio of magnesium to calcium will need to be higher than 1:1.

The aqueous composition consists of water and a water soluble magnesium salt.

The method can be applied to cleaning ware. In another embodiment, contacting includes rinsing or presoaking ware.

The method can reduce any of a variety of detrimental effects of hard water. In an embodiment, the method can reduce scaling. The invention is remarkably effective in removing existing soap scum from a hard surface. In such a method the soap scum on an object is contacted with an aqueous composition including water and a water soluble magnesium salt and the soap scum is removed from the object. The aqueous composition consists of water and a water soluble magnesium salt.

The method can remove soap scum from any of a variety of surfaces. Contacting may also include ceramic tile, an interior surface of a warewashing machine and, removing the soap scum resulting in a shiny surface.. This method can be employed to remove any of a variety of types of soap scum. For example, the soap scum can include calcium salt of fatty acid, alone or in the presence of other soils such as triglycerides and/or protein, which can make the soap scum more adherent to surfaces.

In one embodiment of the invention, the aqueous composition containing excess calcium ion contains at least about 50 ppm calcium ion, e.g. at least about 0.084 g of (5 grain) hardness due to calcium ion. In an embodiment of this method, adding includes adding the water soluble magnesium compound to achieve a total wt-% of magnesium ion of about half the wt-% of calcium ion. For example, at least about 0.12 g (2 grains) of total magnesium ion for water containing 0.32 g (5 grains) of calcium ion as water hardness. In an embodiment of this method, adding includes adding water soluble magnesium compound including an anion that forms a soluble salt with calcium (e.g., MgCl₂) to achieve a total wt-% of magnesium ion of greater than half the wt-% of calcium ion (which is a 1:1 molar ratio). In an embodiment of this method, adding includes adding water soluble magnesium compound including an anion that forms an insoluble salt with calcium (e.g., MgSO₄) to achieve a total wt-% of magnesium ion of about the wt-% of calcium ion (which is about a 2:1 molar ratio).

The present invention includes a method employing water soluble magnesium compound plus water for lime scale control. In one embodiment, the present invention includes a method of reducing calcium precipitate or lime scale from an aqueous composition. For example, this method can include employing aqueous composition to which magnesium compound was added for rinsing ware in warewashing. The method includes providing magnesium ion at predefined ratios to calcium ion in water, meaning magnesium ion in a molar amount equal to or in excess over a molar amount of calcium ion. Such methods can advantageously reduce lime scale or precipitate formation from hard water, remove soap scum. The method can employ a water soluble magnesium salt including an anion of a water soluble calcium salt are more effective than a magnesium salt with an anion of a water insoluble calcium salt.

The present invention also includes a method of reducing precipitation of calcium salt from an aqueous composition. This method can include: providing aqueous composition containing excess calcium ion; adding a water soluble magnesium compound to the aqueous composition containing excess calcium ion; and employing the aqueous composition to which magnesium compound was added for rinsing ware in warewashing, as a presoak for ware in warewashing, as a detergent for ware in warewashing.

The composition is free of builder, sequestrant, chelating agent, or threshold agent. The method includes providing magnesium ion at predefined ratios to calcium ion in water, meaning magnesium ion in a molar amount equal to or in excess over a molar amount of calcium ion. Such methods can advantageously reduce lime scale or precipitate formation from hard water, remove soap scum, or the like. The method can employ a water soluble magnesium salt including an anion of a water soluble calcium salt are more effective than a magnesium salt with an anion of a water insoluble calcium salt.

The present invention includes a method of cleaning ware. This method can include: providing a solid block of a water soluble magnesium compound; contacting the solid block with an aqueous composition to form an aqueous composition including water soluble magnesium compound; and applying the aqueous composition comprising water soluble magnesium compound to an object to clean the object. The method can include providing magnesium ion at predefined ratios to calcium ion in water, such as magnesium ion in a molar amount equal to or in excess over a molar amount of calcium ion. Such methods can advantageously reduce lime scale or precipitate formation from hard water, reduce hard water spotting, remove soap scum. The method employ a water soluble magnesium salt including an anion of a water soluble calcium salt are more effective than a magnesium salt with an anion of a water insoluble calcium salt.

One embodiment, includes a solid block cleaning composition used in the methods. The solid block cleaning composition can include about 99 to 100 wt-% water soluble magnesium compound.

In another embodiment, the present methods can include injecting the present aqueous composition or placing the present solid composition into the water flow being used to rinse the surface. In an embodiment, the present method employs water that wasn't treated with a polymeric water softener bed such as in use today requiring periodic regeneration with sodium chloride for effectiveness.

Contacting can include any of numerous methods for applying a composition, such as spraying the composition, immersing the object in the composition, or a combination thereof.

A concentrate or use concentration of a composition can be applied to or brought into contact with an object by any conventional method or apparatus for applying a cleaning composition to an object. For example, the object can be wiped with, sprayed with, and/or immersed in the composition, or a use solution made from the composition. The composition can be sprayed, or wiped onto a surface; the composition can be caused to flow over the surface, or the surface can be dipped into the composition. Contacting can be manual or by machine.

### Water Soluble Magnesium Compounds

Suitable water soluble magnesium compounds include those selected from the group consisting of magnesium acetate, magnesium benzoate, magnesium bromide, magnesium bromate, magnesium chlorate, magnesium chloride, magnesium chromate, magnesium citrate, magnesium formate, magnesium hexafluorosilicate, magnesium iodate, magnesium iodide, magnesium lactate, magnesium molybdate, magnesium nitrate, magnesium perchlorate, magnesium phosphinate, magnesium salicylate, magnesium tartrate, a hydrate thereof, and a mixture thereof. These salts can be provided as hydrated salts or anhydrous salts.

Suitable water soluble magnesium compounds include magnesium salts with an anion that also forms a soluble salt with calcium. Such salts include those selected from the group consisting of magnesium acetate, magnesium benzoate, magnesium bromide, magnesium bromate, magnesium chlorate, magnesium chloride, magnesium chromate, magnesium formate, magnesium iodide, magnesium lactate, magnesium nitrate, magnesium perchlorate, magnesium phosphinate, magnesium salicylate, a hydrate thereof, and a mixture thereof. These salts can be provided as hydrated salts or anhydrous salts.

Water soluble magnesium compounds approved as GRAS for direct food contact include magnesium chloride and magnesium sulfate.

A cast or pressed solid block or puck of water soluble magnesium compound can also contain water insoluble magnesium compound. The water insoluble compound can slow the speed at which the water soluble magnesium compound dissolves to provide a useful solid cleaning composition. In certain embodiments, the ratio of water soluble to water insoluble magnesium compound can be about 1:10 to about 10:1, about 1:5 to about 5:1, or about 1:3 to about 3:1.

### Additional Ingredients

In certain embodiments, the composition can also include antimicrobial agent, viscosity modifier (cellulosic polymers, guar derivatives and gums, etc.), aesthetic enhancing agent (i.e., dye, odorant, perfume, fragrance), lubricant composition, dispersant, preservative, or thickener. Such ingredients are known and are described in, for example, U.S. Patent Application Publication No. 2003/0139310 and/or No. 20060113506.

### Ingredients to Exclude

The composition is free of additional functional components or ingredients such as chelating agent, sequestrant, builder, threshold agent, surfactant, and sheeting agent.

The cleaning composition is free of added sequestrant or chelating agent. Chelating agents or sequestrants include phosphonates, phosphates, aminocarboxylates, polycarboxylates.

The present method does not employ a surfactant or surfactant system. Excluded surfactants include anionic, nonionic, cationic, and zwitterionic surfactants, which are commercially available from a number of sources.

The present method does not employ a wetting or sheeting agent. A wetting or sheeting agent is typically a water soluble or dispersible low foaming organic material capable of reducing the surface tension of the rinse water to promote sheeting action and to prevent spotting or streaking caused by beaded water after rinsing is completed.

### Use Compositions

The present used in the methods include concentrate compositions and use compositions. For example, a concentrate composition can be diluted, for example with water, to form a use composition. In an embodiment, a concentrate composition can be diluted to a use solution before application to an object. For reasons of economics, the concentrate can be marketed and an end user can dilute the concentrate with water or an aqueous diluent to a use solution. The level of active components in the concentrate composition is dependent on the intended dilution factor and the desired concentration of water soluble magnesium salt.

Generally, a dilution of about 29 mL to about 75.7 L (1 fluid ounce to 20 gallons) of water to about 147 mL to about 3.7 L (5 fluid ounces to 1 gallon) of water is used for aqueous cleaning compositions. In the typical use locus, the concentrate is diluted with a major proportion of water using commonly available tap or service water mixing the materials at a dilution ratio of about 88 mL to about 591 mL (3 to 20 ounces) of concentrate per 378 L (100 gallons) of water. A use solution may be prepared from the concentrate by diluting the concentrate with water at a dilution ratio that provides a use solution having desired properties. In an exemplary embodiment, the concentrate may be diluted at a weight ratio of diluent to concentrate of at least about 20:1 or about 20:1 to about 2000:1.

The concentrate may be diluted with water at the location of use to provide the use solution. When the detergent composition is used in an automatic warewashing or dishwashing machine, it is expected that that the location of use will be inside the automatic warewashing machine.

### Embodiments of Solids

Solid cleaning compositions including a water soluble magnesium compound, for example, a cast solid block of magnesium chloride are described used in the methods. By way of further example, the present invention includes a pressed solid block or puck including water soluble magnesium compound and magnesium carbonate.

A solid cleaning composition of a water soluble magnesium compound (e.g. magnesium chloride) can be prepared by a method including: providing a powder or crystalline form of a water soluble magnesium compound (e.g. magnesium chloride); melting the powder or crystalline form of the water soluble magnesium compound; transferring the molten water soluble magnesium compound into a mold; and cooling the molten salt to solidify it. For example, a solid block of magnesium chloride was made by heating magnesium chloride hexahydrate to its melting point of about 118°C. The molten salt was then transferred to a plastic container to afford a hard solid upon cooling to ambient temperature. For forming a cast solid from magnesium chloride, the presence of water of hydration (and additional water if desired) affords a reduced melting point compared to the anhydrous salt, allowing the temperature of the process to be reduced to a practical level.

A solid cleaning composition of a water soluble magnesium compound (e.g. magnesium carbonate) can be prepared by a method including: providing a powder or crystalline form of a water soluble magnesium compound (e.g. magnesium carbonate); gently pressing the water soluble magnesium compound to form a solid (e.g., block or puck). A solid block was made by compressing about 50 grams of magnesium carbonate monohydrate for about 20 seconds at about 6.8 MPa. (1000 psi).

A solid (e.g., block or puck, pressed or cast) form of a water soluble magnesium compound can be used, for example, for treating of potable water, for treating a facility or home's overall water system, or for treating water fed into a mechanical device such as a dishwasher, or car wash. The method can include, for example, contacting the solid form of a water soluble magnesium compound with water in need of treatment; and using the water for cleaning. The magnesium ions can reduce undesirable precipitation of calcium salts. The magnesium can thus continuously treat water as the solid composition dissolves.

A solid cleaning or rinsing composition as used in the present methods encompasses a variety of forms including, for example, solids, pellets, blocks, and tablets, but not powders. It should be understood that the term "solid" refers to the state of the detergent composition under the expected conditions of storage and use of the solid cleaning composition. In general, it is expected that the detergent composition will remain a solid when provided at a temperature of up to about 37.7 °C or greater than 48.8 °C (100°F or greater than 120°F).

In certain embodiments, the solid cleaning composition is provided in the form of a unit dose. A unit dose refers to a solid cleaning composition unit sized so that the entire unit is used during a single washing cycle. When the solid cleaning composition is provided as a unit dose, it can have a mass of about 1 g to about 50 g. In other embodiments, the composition can be a solid, a pellet, or a tablet having a size of about 50 g to 250 g, of about 100 g or greater, or about 40 g to about 11,000 g.

In other embodiments, the solid cleaning composition is provided in the form of a multiple-use solid, such as, a block or a plurality of pellets, and can be repeatedly used to generate aqueous detergent compositions for multiple washing cycles. In certain embodiments, the solid cleaning composition is provided as a solid having a mass of about 5 g to 10 kg. In certain embodiments, a multiple-use form of the solid cleaning composition has a mass of about 1 to 10 kg. In further embodiments, a multiple-use form of the solid cleaning composition has a mass of about 5 kg to about 8 kg. In other embodiments, a multiple-use form of the solid cleaning composition has a mass of about 5 g to about 1 kg, or about 5 g and to 500 g.

### Packaging System

In some embodiments, the solid composition can be packaged. The packaging receptacle or container may be rigid or flexible, and composed of any material suitable for containing the compositions produced according to the invention, as for example glass, metal, plastic film or sheet, cardboard, cardboard composites, paper, and the like.

Advantageously, since the composition is processed at or near ambient temperatures, the temperature of the processed mixture is low enough so that the mixture may be formed directly in the container or other packaging system without structurally damaging the material. As a result, a wider variety of materials may be used to manufacture the container than those used for compositions that processed and dispensed under molten conditions.

Suitable packaging used to contain the compositions is manufactured from a flexible, easy opening film material.

### Dispensing of the Processed Compositions

The solid cleaning composition can be dispensed in any suitable method generally known. The cleaning or rinsing composition can be dispensed from a spray-type dispenser such as that disclosed in U.S. Patent Nos. 4,826,661, 4,690,305, 4,687,121, 4,426,362 and in U.S. Patent Nos. Re 32,763 and 32,818. Briefly, a spray-type dispenser functions by impinging a water spray upon an exposed surface of the solid composition to dissolve a portion of the composition, and then immediately directing the concentrate solution including the composition out of the dispenser to a storage reservoir or directly to a point of use. When used, the product is removed from the package (e.g.) film and is inserted into the dispenser. The spray of water can be made by a nozzle in a shape that conforms to the solid shape. The dispenser enclosure can also closely fit the detergent shape in a dispensing system that prevents the introduction and dispensing of an incorrect detergent. The aqueous concentrate is generally directed to a use locus.

In an embodiment, the composition can be dispensed by immersing either intermittently or continuously in water. The composition can then dissolve, for example, at a controlled or predetermined rate. The rate can be effective to maintain a concentration of dissolved cleaning agent that is effective for cleaning.

In an embodiment, the present composition can be dispensed by scraping solid from the solid composition and contacting the scrapings with water. The scrapings can be added to water to provide a concentration of dissolved cleaning agent that is effective for cleaning.

The present invention can be better understood with reference to the following examples. These examples are intended to be representative of specific embodiments of the invention, and are not intended as limiting the scope of the invention.

### EXAMPLES

### Example 1 - Water Soluble Magnesium Compounds Reduce Precipitation of Calcium Salts from Hard Water

This Example demonstrates that adding a hardness ion (Mg²⁺) to water worked as well as a conventional chelating agent or sequestrant (sodium tripolyphosphate (STPP)) at preventing precipitation of calcium salts.

### Materials and Methods

Formation of a precipitate in water reduces the transmission of visible light through the water. A transmittance of 100% indicates that no precipitate formed, while a transmittance of 0% indicates that so much precipitate formed that light no longer passed through the sample. Transmittance was measured for water containing either MgCl₂ (present invention) or STPP (comparative example)at pH values of about 8, about 10, and about 12, and at temperatures of about 20 °C, about 45 °C, and about 70 °C. Temperatures were chosen in an attempt to reflect room temperature (20°C), general laundry temperature (45°C) and general automatic warewashing temperature (70°C). The results are reported in Figures 1-6 and the Tables below.

### Results

The data obtained is shown in Figures 1-6 and the corresponding Tables below.

The graphs in Figures 1-6, which each have an x, y, and z axis. The x-axis is a measure of the molar ratio of calcium to builder, e.g., STPP or water soluble magnesium compound. The y-axis is a measure of the level of light transmittance thru the samples with 0% being no light transmitted and 100% being the entire beam of light transmitted. Full or partial loss of transmittance occurs as a consequence of the presence of particulate formation in the initially clear samples. An effective builder prevents or reduces precipitation resulting in a clear sample. The z-axis is a measure of the test temperature, ranging from 20-60 °C.

Figure 1 is illustrative of a comparative example. Figure 1 is a plot of the performance of STPP as a builder in the presence of various levels of calcium, at various temperatures, and at a constant pH of 8 and illustrating the impact of Ca/builder ratio and temperature on the building performance of STPP. Data for Figure 1 is provided in the table below. Generally, the plot of Figure 1 shows that STPP is a good chelating agent and as expected as the concentration of calcium ions increases and as the temperature increases, STPP has decreasing effectiveness in chelating calcium ions as reflected in the reduction in the transmittance of the samples.

| pH | T (C) | ppm CaCO3 | % Transmittance | Ca/STPP (wt) | Ca/STPP (molar) |
|---|---|---|---|---|---|
| 8 | 20 | 50 | 100 | 0.07 | 0.61 |
| 8 | 20 | 300 | 81.1 | 0.40 | 3.68 |
| 8 | 20 | 600 | 67.4 | 0.80 | 7.36 |
| 8 | 45 | 50 | 99.2 | 0.07 | 0.61 |
| 8 | 45 | 300 | 72.6 | 0.40 | 3.68 |
| 8 | 45 | 600 | 64.1 | 0.80 | 7.36 |
| 8 | 70 | 50 | 99.1 | 0.07 | 0.61 |
| 8 | 70 | 300 | 41.3 | 0.40 | 3.68 |
| 8 | 70 | 600 | 41.5 | 0.80 | 7.36 |

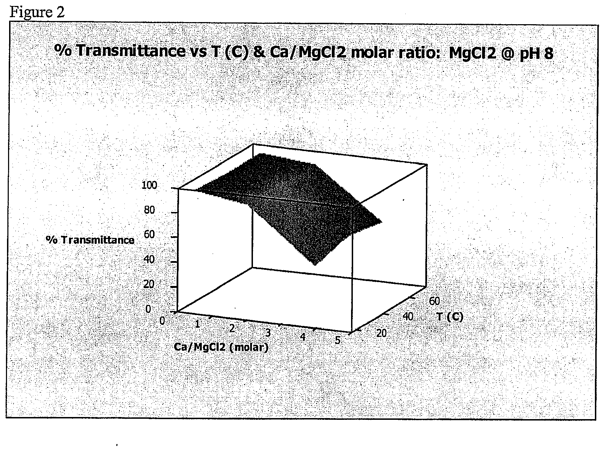

Figure 2 is illustrative of the invention. Figure 2 is a plot of the performance of magnesium chloride in preventing precipitation in the presence of various levels of calcium, at various temperatures, and at a constant pH of 8. Data for Figure 2 is provided in the table below. This graph shows that a water soluble salt of magnesium (e.g., magnesium chloride) was unexpectedly capable of controlling the precipitation of water hardness even at a neutral pH. Generally, the plot of Figure 2 shows that magnesium chloride is a good chelating agent and as the concentration of calcium ions increases and as the temperature increases, magnesium chloride has decreasing effectiveness in chelating calcium ions as reflected in the reduction in the transmittance of the samples. The results shown in Figure 2 are surprisingly consistent with that shown in the comparative Figure 1.

| **pH** | **T (C)** | **ppm CaCO3** | **% Transmittance** | **Ca/MgCl₂ (wt)** | **Ca/MgCl₂ (molar)** |
|---|---|---|---|---|---|
| 8 | 20 | 50 | 98.1 | 0.07 | 0.32 |
| 8 | 20 | 300 | 91.1 | 0.40 | 1.90 |
| 8 | 20 | 600 | 48 | 0.80 | 3.81 |
| 8 | 45 | 50 | 96.2 | 0.07 | 0.32 |
| 8 | 45 | 300 | 92.3 | 0.40 | 1.90 |
| 8 | 45 | 600 | 55.8 | 0.80 | 3.81 |
| 8 | 70 | 50 | 96.3 | 0.07 | 0.32 |
| 8 | 70 | 300 | 92.3 | 0.40 | 1.90 |
| 8 | 70 | 600 | 50.9 | 0.80 | 3.81 |

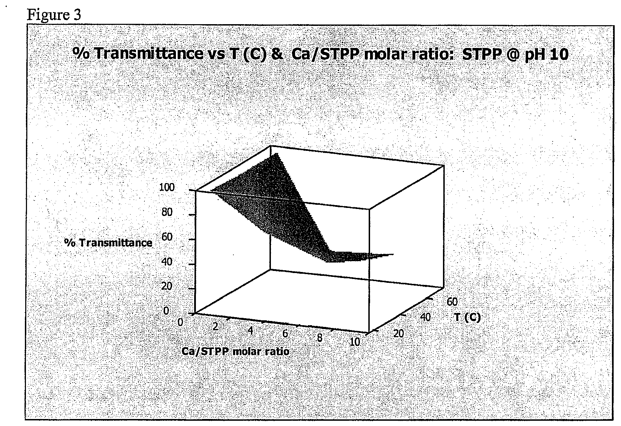

Figure 3 is a plot illustrative of a comparative example. Figure 3 shows the performance of STPP as a builder in the presence of various levels of calcium, at various temperatures, and at a constant pH of 10. Data for Figure 3 is provided in the table below. A comparison of this graph with the results obtained at pH 8 (Figure 1) shows that the increased alkalinity gives reduced building performance at elevated temperatures, particularly around 60 °C.

| **pH** | **Temp.(C)** | **Ppm CaCO3** | **% Transmittance** | **Ca/STTP (wt)** | **Ca/STPP (molar)** |
|---|---|---|---|---|---|
| 10 | 20 | 50 | 99.7 | 0.07 | 0.61 |
| 10 | 20 | 300 | 70.6 | 0.40 | 3.68 |
| 10 | 20 | 600 | 51.2 | 0.80 | 7.36 |
| 10 | 45 | 50 | 98.5 | 0.07 | 0.61 |
| 10 | 45 | 300 | 49.9 | 0.40 | 3.68 |
| 10 | 45 | 600 | 36.8 | 0.80 | 7.36 |
| 10 | 70 | 50 | 98.2 | 0.07 | 0.61 |
| 10 | 70 | 300 | 22.4 | 0.40 | 3.68 |
| 10 | 70 | 600 | 26 | 0.80 | 7.36 |

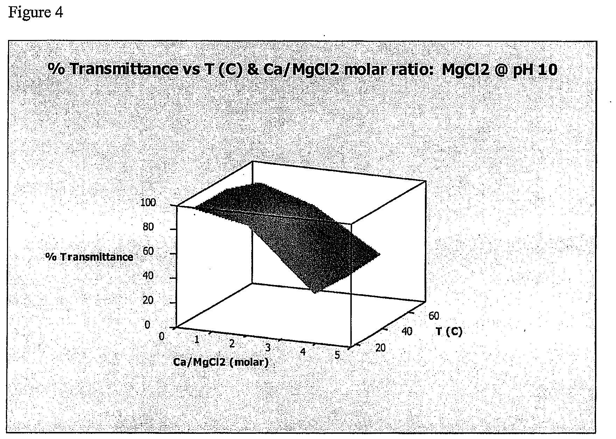

Figure 4 is a plot illustrative of the invention. Figure 4 shows the performance of magnesium chloride in preventing precipitation in the presence of various levels of calcium, at various temperatures, and at a constant pH of 10. Data for Figure 4 is provided in the table below. This graph shows that a water soluble salt of magnesium (e.g., magnesium chloride) was unexpectedly capable of controlling the precipitation of water hardness even at a basic pH. The increased alkalinity did not significantly affect the degree of calcium precipitation compared to pH 8 (Figure 2). This is unexpected.

| **pH** | **T (C)** | **ppm CaCO3** | **% Transmittance** | **Ca/MgCl₂ (wt)** | **Ca/MgCl₂ (molar)** |
|---|---|---|---|---|---|
| 10 | 20 | 50 | 97.4 | 0.07 | 0.32 |
| 10 | 20 | 300 | 87.8 | 0.40 | 1.90 |
| 10 | 20 | 600 | 37.6 | 0.80 | 3.81 |
| 10 | 45 | 50 | 96.5 | 0.07 | 0.32 |
| 10 | 45 | 300 | 81.1 | 0.40 | 1.90 |
| 10 | 45 | 600 | 35.4 | 0.80 | 3.81 |
| 10 | 70 | 50 | 86.1 | 0.07 | 0.32 |
| 10 | 70 | 300 | 72.4 | 0.40 | 1.90 |
| 10 | 70 | 600 | 38.1 | 0.80 | 3.81 |
| 10 | 45 | 300 | 79.9 | 0.40 | 1.90 |
| 10 | 45 | 300 | 82 | 0.40 | 1.90 |
| 10 | 45 | 300 | 81.4 | 0.40 | 1.90 |

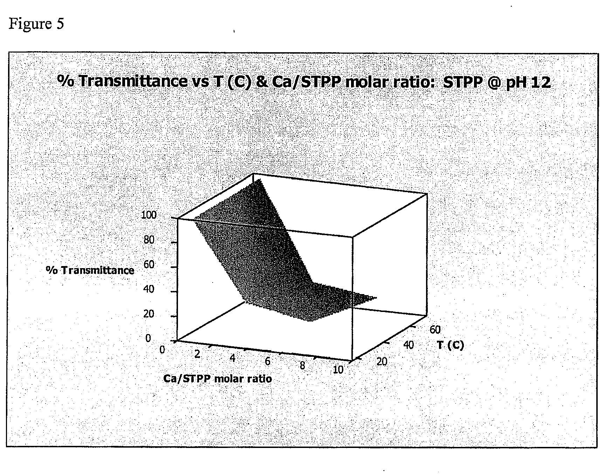

Figure 5 is a plot illustrative of a comparative example. Figure 5 shows the performance of STPP as a builder in the presence of various levels of calcium, at various temperatures, and at a constant pH of 12. Data for Figure 5 is provided in the table below. This graph shows that STPP has quit working to control calcium precipitation at molar ratios of 4 Ca/STPP and higher with light transmittance dropping down to about 20%. Once again elevated temperatures make the STPP system more sensitive to water hardness.

| **pH** | **Temp.(C)** | **Ppm CaCO3** | **% Transmittance** | **Ca/STTP (wt)** | **Ca/STPP (molar)** |
|---|---|---|---|---|---|
| 12 | 20 | 50 | 98.8 | 0.07 | 0.61 |
| 12 | 20 | 300 | 35.4 | 0.40 | 3.68 |
| 12 | 20 | 600 | 25.5 | 0.80 | 7.36 |
| 12 | 45 | 50 | 99.2 | 0.07 | 0.61 |
| 12 | 45 | 300 | 26.4 | 0.40 | 3.68 |
| 12 | 45 | 600 | 19.7 | 0.80 | 7.36 |
| 12 | 70 | 50 | 100 | 0.07 | 0.61 |
| 12 | 70 | 300 | 20.3 | 0.40 | 3.68 |
| 12 | 70 | 600 | 13.4 | 0.80 | 7.36 |

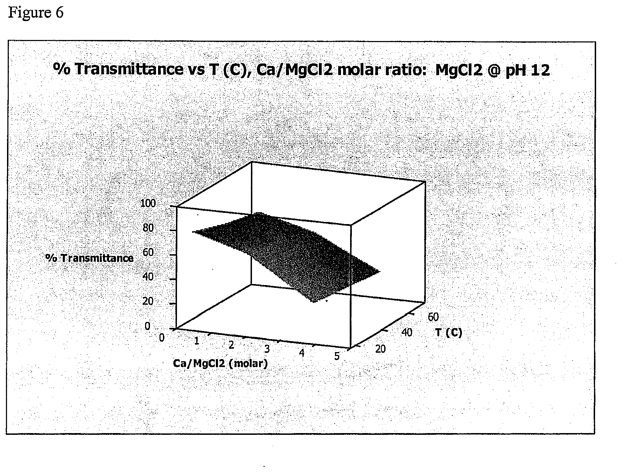

Figure 6 is illustrative of the invention. Figure 6 shows a plot of the performance of magnesium chloride in preventing precipitation in the presence of various levels of calcium, at various temperatures, and at a constant pH of 12. A comparison of this graph with Figure 5 shows that under very alkaline conditions a water soluble magnesium compound such as magnesium chloride is comparable to STPP in controlling water hardness

| **pH** | **T (C)** | **ppm CaCO3** | **% Transmittance** | **Ca/MgCl₂ (wt)** | **Ca/MgCl₂ (molar)** |
|---|---|---|---|---|---|
| 12 | 20 | 50 | 78.9 | 0.07 | 0.32 |
| 12 | 20 | 300 | 65.9 | 0.40 | 1.90 |
| 12 | 20 | 600 | 30.9 | 0.80 | 3.81 |
| 12 | 45 | 50 | 69 | 0.07 | 0.32 |
| 12 | 45 | 300 | 57.6 | 0.40 | 1.90 |
| 12 | 45 | 600 | 27.6 | 0.80 | 3.81 |
| 12 | 70 | 50 | 62.9 | 0.07 | 0.32 |
| 12 | 70 | 300 | 51.1 | 0.40 | 1.90 |
| 12 | 70 | 600 | 24.7 | 0.80 | 3.81 |

### Discussion

As can be seen in Figures 1-6, magnesium chloride matched or exceeded the ability of STPP to soften water under most conditions. By matched or exceeded the ability we mean that the magnesium chloride reduced lime scale (as reflected by percent transmittance) to a level comparable to or lower than that achieved with STPP, e.g., for most molar ratios of calcium and builder. In particular, the performance of magnesium chloride at pH values of 8 and 10 exceeded the performance of STPP at all temperature values.

At a pH value of 12, magnesium chloride started at about 80% transmittance, but had a lower slope compared to STPP. The lower slope indicates better control of water hardness precipitation as the ratio of calcium/builder increased.

### Example 2 - Water Soluble Magnesium Compounds Reduce Formation of Scale from Hard Water

This Example demonstrates that adding a hardness ion (Mg²⁺) to water reduced formation of lime scale from hard water.

### Materials and Methods

Tap water with 1.1 g (17 grain) hardness and a 2:1 Ca:Mg weight ratio was spiked with various levels of magnesium chloride and then incubated in glass bottles in a 60 °C (140°F) oven for about two weeks. The bottles were then visually evaluated for lime scale build-up.

### Results

The results are presented in the table below.

| Magnesium Chloride Added (wt-%) | Scale on Bottle |
|---|---|
| 0 | present |
| 0.007 | present |
| 0.067 | present |
| 0.48 | none |
| 2.4 | none |
| 7.2 | none |
| 14 | none |

The data clearly shows the benefit of adding water soluble magnesium salt to the tap water. In particular, when 0.48 wt-% or more of magnesium chloride was added, no lime scale build-up was observed on the surface of the glass bottle. By contrast, when either no magnesium was present, or when less magnesium chloride was added, lime scale build-up was observed on the surface of the glass bottle.

### Example 3 - Injecting Water Soluble Magnesium Compounds for Rinse Cycle Reduced Formation of Scale from Hard Water in Warewashing Machine

This Example demonstrates that, injecting only a hardness ion (Mg²⁺) into rinse water reduced formation of lime scale from hard water on a dishwasher.

### Materials and Methods

A dishwashing machine was run for 100 cycles using 1.1 g (17 grain) hard water for the wash and rinse cycles with no added rinse agent. A dishwashing machine was run for 100 cycles using 1.1 g (17 grain) hard water and with water soluble magnesium compound, magnesium sulfate, introduced as the sole rinse agent. The magnesium sulfate was introduced at a molar ratio of magnesium ion to calcium ion of 1:1. No detergent was used in any of the wash cycles.

### Results

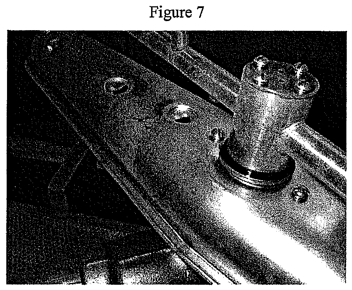

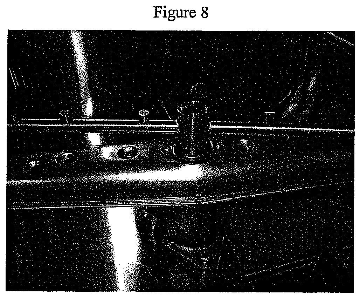

Figures 7 and 8 are photographs of interiors of dishwashing machines after 100 cycles run using 1.1 g (17 grain) hard water only or using 1.1 g hard water and with water soluble magnesium compound, magnesium sulfate, introduced as the sole rinse agent.

The presence of water soluble magnesium salt, magnesium sulfate, as the sole rinse agent prevented the build-up of hard water lime scale on metal as shown in Figure 8. Figure 8 shows the interior of an automatic dishwashing machine with substantially no lime scale. In fact, the interior of Figure 8 is shiny and appears as would the interior of a new automatic dishwashing machine. Figure 7 shows appreciable hard water lime scale on the interior of the machine. The lime scale is dull and the dishwasher appears as if a white powder was dusted on the interior surfaces. No builder or sheeting agent was needed to obtain this benefit.

### Example 4 - Magnesium Sulfate as a Source of Magnesium Ion In Excess Over Calcium Ion Reduced Scale Formation on Glasses

This Example demonstrates that rinsing glasses with hard water containing only added hardness ion (Mg²⁺) reduced formation of lime scale from hard water on glasses when magnesium ion was in excess over calcium ion.

### Materials and Methods

A glass was run though a dishwashing machine for 100 cycles using 1.1 g (17 grain) hard water for the wash and rinse cycles with no added rinse agent. Other glasses were run though a dishwashing machine for 100 cycles using 1.1 g (17 grain) hard water in a dishwashing machine with water soluble magnesium compound, magnesium sulfate, introduced as the sole rinse agent. In separate series of 100 cycles, the magnesium sulfate was introduced at varying concentrations to provide molar ratios of magnesium ion to calcium ion of 1:1, 1.5:1, 2:1, 2.5:1, and 3:1. No detergent was used in any of the wash cycles.

### Results

The results in Figure 9 show that water soluble magnesium compound, magnesium sulfate, as the sole rinse agent reduced and prevented build-up of hard water scale on glassware. In Figure 9, glass "C" is a control using hard water alone as the rinse agent. The other glasses were rinsed using various molar ratios of magnesium to calcium ranging from 1-3 moles magnesium ion to calcium ion.

These ratios are based on the total amount of magnesium present including that present in the incoming water. Glass "C" in Figure 9 is clouded in appearance. It looks as though it is frosted or has been etched with an etchant. Glass 1:1 is even cloudier or more frosted than the control glass. Glasses 1.5:1 up to glass 3:1 are increasingly clearer in appearance than the previous glass (lower ratio) until the 3:1 glass has substantially no filming, spotting, cloudiness, or etched appearance. Unlike the deposits on the metal of the dishwasher, rinsing glasses with a 1:1 ratio of magnesium to calcium increased precipitation of hard water scale relative to the control. However, a 1.5:1 ratio and higher gave significant improvement up to a glass free of lime scale at a ratio of 3:1.

### Example 5 - Soluble Magnesium Salt Including Anion of Soluble Calcium Salt Reduced Formation of Scale from Hard Water in Warewashing at Lower Ratios

This Example shows a water soluble magnesium salt (MgCl₂) providing an anion that forms a water soluble calcium salt reduced formation of lime scale from hard water at lower ratios of Mg²⁺ to Ca²⁺ than a magnesium salt (MgSO₄) providing an anion of a water insoluble calcium salt.

### Materials and Methods

A first glass and a second glass were run though a dishwashing machine for 100 cycles using 1.1 g (17 grain) hard water in a dishwashing machine with water soluble magnesium compound, magnesium chloride or magnesium sulfate, introduced as the sole rinse agent. The water soluble magnesium compounds were introduced at molar ratios of magnesium ion to calcium ion of 1:1. No detergent was used in any of the wash cycles.

### Results

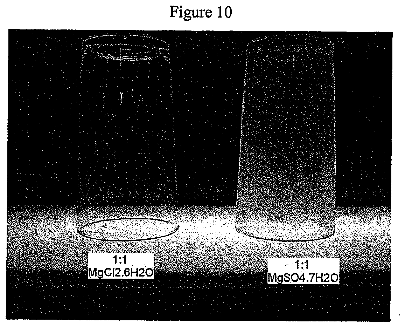

The results in Figure 10 compare glasses rinsed with two sources of water soluble magnesium compound as the source of the added magnesium ion. Magnesium chloride and calcium chloride are both soluble. However, magnesium sulfate is soluble but calcium sulfate is only slightly soluble.

| Compound | Water Solubility (20 °C) |
|---|---|
| magnesium chloride | 54.6 |
| magnesium sulfate | 33.7 |
| calcium chloride | 42.0 |
| calcium sulfate | 0.2 |

Interestingly, magnesium chloride effectively reduced formation of lime scale from hard water at a lower concentration than magnesium sulfate.

A magnesium compound such as magnesium chloride where the analogous calcium salt is water soluble was found to be more effective in preventing hard water scale than one where the analogous calcium salt is water insoluble. Figure 10 illustrates this at a 1:1 molar ratio of total magnesium ion to calcium ion for both salts. The glass on the left, treated with a 1:1 molar ratio of MgCl₂6H₂O is substantially clear whereas the glass on the right, treated with a 1:1 molar ratio of MgSO₄7H₂O is completely cloudy . The MgSO₄ treated glass (right) appears as if it has been dusted completely with an adherent powder.

### Example 6a - Water Containing Water Soluble Magnesium Compound Removed Soap Scum

Surprisingly, rinsing a tile with hard water containing only added hardness ion (Mg²⁺) removed soap scum from the tile.

### Materials and Methods

A dilute mixture of coconut soap, hard water, and calcium carbonate was placed on a black ceramic tile and allowed to air dry. This was repeated five times, producing a heavily soiled tile. A first section of the soiled tile was immersed in unheated 1.1 g (17 grain) hard water for about 1 minute. A second section of the soiled tile was immersed in unheated 1.1 g (17 grain) hard water spiked with about 400 ppm of magnesium chloride. The middle section of the tile was not soaked after soiling.

### Results

The portion of the tile that was immersed in hard water without magnesium ion showed considerable soap scum. The portion of the tile immersed in hard water containing 400 ppm magnesium chloride showed significantly less soap scum compared to the portions of the tile that were immersed only in hard water or untreated. The water containing water soluble magnesium compound without a builder or surfactant effectively removed soap scum.

The magnesium chloride was added to obtain a weight ratio of magnesium ion to calcium ion of 2:1 in the composition of water soluble magnesium ion. Surprisingly, a composition of a water soluble magnesium salt including magnesium ion in excess of calcium ion, will not only reduce or prevent formation of lime scale from hard water, but it will also remove soap scum.

### Example 6b - Water Soluble Magnesium Compound Reduced Streaking by Glass Cleaner

This Example demonstrates that washing a window with conventional glass cleaner formulation spiked with Mg²⁺ cleaned the window better than the conventional glass cleaner without the additional hardness ion.

### Materials and Methods

One side of a window was washed with a commercially available glass cleaner. The other side was washed with the same commercially available glass cleaner containing 200ppm water soluble magnesium salt, e.g., magnesium chloride.

### Results

The left half of the window was cleaned with conventional glass cleaner with 200ppm magnesium chloride. The right half of the window was cleaned with the same conventional glass cleaner without the addition of magnesium chloride. Streaking on the glass was greatly reduced with the addition of water soluble magnesium salt to the formula. Surprisingly, the composition of glass cleaner and water soluble magnesium salt cleaned the glass better than the glass cleaner alone.

### Example 7 - Water Soluble Magnesium Compound Removed Rust

Surprisingly, soaking a rusty object in water containing only added hardness ion (Mg²⁺) removed rust from the object.

### Materials and Methods

Pieces of rusty steel were placed in two beakers. One beaker contained 400ppm magnesium chloride in 1.1 g (17 grain) water. The other contained 1.1 g (17 grain) water. After a couple of hours on the bench top, the pieces of steel were removed.

### Results

The water in the beaker containing rusty steel in 400ppm magnesium chloride in 1.1 g (17 grain) water was rust colored. After soaking, the hard water contained some small pieces of rust, but was generally. The hard water did not dissolve rust. The water spiked with water soluble magnesium salt dissolved rust.

### Example 8 - Water Soluble Magnesium Compounds Protect Surfaces

This Example illustrates that water soluble magnesium compound (e.g., magnesium chloride) was found to protect a surface from hard water.

### Materials and Methods

The contact angle of deionized water on ceramic tiles was studied. The tiles were first rinsed with a 1000 ppm solution of either magnesium chloride or magnesium sulfate and then wiped dry. The contact angle of deionized water on the tiles was measured and the tiles then rinsed with 1.1 g (17 grain) hard water, wiped dry, and the contact angle of deionized water measured again.

### Results

| | Water Contact Angle | | |
|---|---|---|---|
| | before hard water rinse | after hard water rinse | ratio after/before |
| untreated | 37 | 48 | 1.3 |
| MgCl₂ | 21 | 28 | 1.3 |
| MgSO₄ | 11 | 24 | 2.2 |

### Discussion

It was hypothesized that the benefits of water soluble magnesium compounds might be a consequence of not only the water solubility of the potential calcium salts which could form in solution but also the interaction of the magnesium compound with calcium containing substrates such as glass and ceramic. To test this hypothesis, the contact angle of deionized water on ceramic tiles was studied. Improved protection of a calcium-containing substrate was indicated by reduced effect of a hard water rinse on the contact angle of water on the substrate. In other words, a lower ratio of the contact angle of water before and after hard water rinsing of the substrate correlates to improved protection of the substrate from hard water. The data demonstrates that magnesium chloride provided superior protection to a calcium-containing substrate such as a ceramic tile compared to magnesium sulfate.

### Example 9 - Solid Compositions of Water Soluble Magnesium Compound

Magnesium chloride was prepared as a cast solid block. Magnesium carbonate was prepared as a pressed solid.

### Methods and Results

Solids can be prepared from powders or crystalline materials by melting and then transferring the molten material into a mold for solidification upon cooling. A solid block of magnesium chloride was made by heating magnesium chloride hexahydrate to its melting point of about 118°C. The molten salt was then transferred to a plastic container to afford a hard solid upon cooling to ambient temperature.

A solid block was made by compressing about 50 grams of magnesium carbonate monohydrate for about 20 seconds at about 6.8 MPa. (1000 psi). Although magnesium carbonate is water insoluble, a pressed block could also be made including both magnesium carbonate and a water soluble magnesium salt, such as magnesium chloride.

### Discussion

A pressed or cast solid of a water soluble magnesium compound can be used, for example, for the treatment of potable water, for the treatment of a facility or home's overall water system, or for the treatment of water feed into a mechanical device such as a dishwasher, clothes washer, or car wash. By adding magnesium compound to the solid composition, when the composition is diluted to a use solution, the magnesium ions can reduce undesirable precipitation of calcium salts. The magnesium can thus continually treat the equipment as the solid composition dissolves.

Magnesium chloride and magnesium sulfate meet the FDA's GRAS requirements and are approved as an unrestricted direct food additive. Not wishing to be bound by theory, it is believed that, in the pressed solid of magnesium carbonate, the water of hydration can be a binding agent in the block. For forming a cast solid from magnesium chloride, the presence of water of hydration (and additional water if desired) affords a reduced melting point compared to the anhydrous salt, allowing the temperature of the process to be reduced to a practical level.

## Claims

1. A method of cleaning ware comprising: contacting the ware in an automatic warewashing machine with an aqueous composition consisting of water containing calcium ions and a water soluble magnesium salt; wherein the aqueous composition during contacting comprises magnesium ion in a molar amount equal to or in excess over a molar amount of calcium ion; recovering the ware with an acceptable amount of hard water spotting, wherein an acceptable amount of hard water spotting comprises up to one quarter of the surface spotted, and wherein the water soluble magnesium salt comprises an anion that forms a soluble calcium salt.

2. The method of claim 1, wherein the water soluble magnesium salt is magnesium chloride.

3. The method of claim 1, wherein the water soluble magnesium salt comprises an anion that forms a sparingly soluble calcium salt, and the aqueous composition during contacting comprises magnesium ion in a molar amount equal to or greater than two-times the molar amount of calcium ion.

4. The method of claim 1, wherein the water soluble magnesium salt is selected from the group consisting of magnesium acetate, magnesium benzoate, magnesium bromide, magnesium bromate, magnesium chlorate, magnesium chloride, magnesium chromate, magnesium citrate, magnesium formate, magnesium hexafluorosilicate, magnesium iodate, magnesium iodide, magnesium lactate, magnesium molybdate, magnesium nitrate, magnesium perchlorate, magnesium phosphinate, magnesium salicylate, a hydrate thereof, and a mixture thereof.

5. The method of claim 1, wherein contacting comprises rinsing or presoaking ware.

6. The method of claim 1, wherein contacting comprises rinsing or presoaking a medical instrument

7. The method of claim 1, further comprising reducing precipitation of calcium salt or reducing scaling or reducing solid deposits.

## Patentansprüche

1. Verfahren zum Reinigen von Objekten, umfassend das Inberührungbringen der Objekte in einer automatischen Spülmaschine mit einer wässrigen Zusammensetzung, die aus Wasser besteht, das Calciumionen und ein wasserlösliches Magnesiumsalz umfasst, wobei die wässrige Zusammensetzung während des Inberührungbringens Magnesiumionen in einer molaren Menge umfasst, die wenigstens einer molaren Menge Calciumionen entspricht, wobei die Objekte von einer akzeptablen Menge an Hartwasserflecken befreit werden, wobei eine akzeptable Menge an Hartwasserflecken bis zu einem Viertel der Oberfläche umfasst, und wobei das wasserlösliche Magnesiumsalz ein Anion umfasst, das ein lösliches Calciumsalz bildet.

2. Verfahren nach Anspruch 1, wobei das wasserlösliche Magnesiumsalz Magnesiumchlorid ist.

3. Verfahren nach Anspruch 1, wobei das wasserlösliche Magnesiumsalz ein Anion umfasst, das ein schwerlösliches Calciumsalz bildet, und die wässrige Zusammensetzung während des Inberührungbringens Magnesiumionen in einer molaren Menge umfasst, die wenigstens dem Doppelten der molaren Menge an Calciumionen entspricht.

4. Verfahren nach Anspruch 1, wobei das wasserlösliche Magnesiumsalz ausgewählt ist aus der Gruppe bestehend aus Magnesiumacetat, Magnesiumbenzoat, Magnesiumbromid, Magnesiumbromat, Magnesiumchlorat, Magnesiumchlorid, Magnesiumchromat, Magnesiumcitrat, Magnesiumformat, Magnesiumhexafluorosilikat, Magnesiumiodat, Magnesiumiodid, Magnesiumlactat, Magnesiummolybdat, Magnesiumnitrat, Magnesiumperchlorat, Magnesiumphosphinat, Magnesiumsalicylat, einem Hydrat davon und einer Mischung davon.

5. Verfahren nach Anspruch 1, wobei das Inberührungbringen das Spülen oder das Einweichen der Objekte umfasst.

6. Verfahren nach Anspruch 1, wobei das Inberührungbringen das Spülen oder Einweichen eines medizinischen Instruments umfasst.

7. Verfahren nach Anspruch 1, das ferner das Vermindern der Ausfällung von Calciumsalz oder das Vermindern von Kalkablagerungen oder das Vermindern von Feststoffablagerungen umfasst.

## Revendications

1. Procédé de nettoyage de matériel comprenant : la mise en contact du matériel dans une machine automatique de nettoyage de matériel avec une composition aqueuse constituée d'eau contenant des ions calcium et un sel de magnésium hydrosoluble ; dans lequel la composition aqueuse comprend l'ion magnésium en concentration molaire supérieure ou égale à une concentration en ion calcium pendant la mise en contact ; la récupération du matériel avec une quantité acceptable de taches à l'eau dure, une quantité acceptable de taches à l'eau dure comprenant jusqu'à un quart de la surface tachée, et le sel de magnésium hydrosoluble contenant un anion qui forme un sel soluble de calcium.

2. Procédé selon la revendication 1, dans lequel le sel de magnésium hydrosoluble est du chlorure de magnésium.

3. Procédé selon la revendication 1, dans lequel le sel de magnésium hydrosoluble contient un anion qui forme un sel modérément soluble de calcium, et où la composition aqueuse contient, pendant la mise en contact, des ions magnésium en concentration molaire supérieure ou égale à deux fois la concentration molaire de l'ion calcium.

4. Procédé selon la revendication 1, dans lequel le sel de magnésium hydrosoluble est choisi dans l'ensemble constitué de l'acétate de magnésium, du benzoate de magnésium, du bromure de magnésium, du bromate de magnésium, du chlorate de magnésium, du chlorure de magnésium, du chromate de magnésium, du citrate de magnésium, du formate de magnésium, de l'hexafluorosilicate de magnésium, de l'iodate de magnésium, de l'iodure de magnésium, du lactate de magnésium, du molybdate de magnésium, du nitrate de magnésium, du perchlorate de magnésium, du phosphinate de magnésium, du salicylate de magnésium, d'un hydrate de ceux-ci et d'un mélange de ceux-ci.

5. Procédé selon la revendication 1, dans lequel la mise en contact comprend le rinçage ou le prétrempage du matériel.

6. Procédé selon la revendication 1, dans lequel la mise en contact comprend le rinçage ou le prétrempage d'un instrument médical.

7. Procédé selon la revendication 1, comprenant en outre la réduction de la précipitation de sel de calcium ou la réduction de l'entartrage ou la réduction de dépôts de matière solide.
